# EUROPÄISCHE PATENTSCHRIFT

(11) **EP 1 117 575 B1**
(45) Veröffentlichungstag und Bekanntmachung des Hinweises auf die Patenterteilung: **18.01.2006**
(21) Anmeldenummer: 00956084.8
(22) Anmeldetag: 19.07.2000
(51) Int. Cl.: B60S 1/38

(54) **WISCHBLATT ZUM REINIGEN VON SCHEIBEN AN KRAFTFAHRZEUGEN**
WIPER BLADE FOR CLEANING VEHICLE WINDSCREENS
RACLETTE D'ESSUIE-GLACE DE VEHICULES AUTOMOBILES

(30) Priorität: 30.07.1999 DE 19935858
(43) Veröffentlichungstag der Anmeldung: 25.07.2001
(73) Patentinhaber: ROBERT BOSCH GMBH, 70442 Stuttgart (DE)
(72) Erfinder: WYNEN, Paul, B-3910 Neerpelt (BE); HERINCKX, Dirk, B-3350 Drieslinter (BE); ROEKENS, Jurgen, B-1820 Steenokkerseel (BE)
(86) Internationale Anmeldenummer: PCT/DE2000/002351
(87) Internationale Veröffentlichungsnummer: WO 2001/008948

(56) Entgegenhaltungen:
- DE-A- 4 410 446
- GB-A- 2 144 976
- US-A- 3 021 548

## Beschreibung

### Stand der Technik

Die Erfindung geht von einem Wischblatt gemäß den Merkmalen des Oberbegriffs des Patentanspruchs 1 aus.

Bekannte Scheibenwischer besitzen einen Wischarm, der aus einem auf einer Antriebsachse befestigten Befestigungsteil, einem mit diesem über ein Kniegelenk verbundenen Gelenkteil und aus einer sich an das Gelenkteil starr anschließenden Wischstange aufgebaut ist. Ferner besitzt der Scheibenwischer ein Wischblatt, das ein Tragbügelsystem und eine von diesem gehaltene Wischleiste aufweist. Das Wischblatt ist am Wischarm angelenkt, indem ein hakenförmiges Ende der Wischstange zwischen zwei Seitenwangen des Tragbügelsystems greift und einen Gelenkbolzen umfaßt. Das so gebildete Gelenk führt das Wischblatt mit der Wischleiste über eine Kraftfahrzeugscheibe, wobei das Gelenkteil und das Tragbügelsystem es ermöglichen, daß sich die Wischleiste einer Wölbung der Kraftfahrzeugscheibe anpaßt. Ein erforderlicher Anpreßdruck der Wischleiste auf der Kraftfahrzeugscheibe wird mit mindestens einer Zugfeder erreicht, die das Befestigungsteil und das Gelenkteil gemeinsam mit der Wischstange über das Kniegelenk verspannt.

Die Wischleiste besteht aus einem Elastomer, z.B. einem Natur- oder Synthesekautschuk, oder aus Äthylenpropylen. Sie hat eine Kopfleiste, die über einen Kippsteg mit einer auf der zu wischenden Scheibe aufliegenden Wischlippe verbunden ist. Durch den Kippsteg kann die Wischlippe im Umkehrpunkt der Wischbewegung in die entgegengesetzte Richtung umklappen, so daß sie stets einen günstigen Winkel zur Windschutzscheibe einnimmt. Wird der Scheibenwischer betätigt, gleitet die Wischleiste mit der Wischlippe über die Kraftfahrzeugscheibe, wobei sie sich durch Reibung zwischen der Wischlippe und der Windschutzscheibe abnutzt. Ferner wirken Umwelteinflüsse auf die Wischleiste, wie beispielsweise Temperaturschwankungen, UV-Strahlung, Salzwasser, Abgase usw., die zu einer frühzeitigen Werkstoffalterung und einem verstärkten Verschleiß führen können.

Um sicher zu stellen, daß die Wischleiste in einwandfreiem Zustand ist, wenn ein neues Kraftfahrzeug ausgeliefert wird, ist es bekannt, die Wischleiste mit einem Schutzprofil abzudecken, bevor das Kraftfahrzeug konserviert wird. Das Schutzprofil wird erst ehtferht, wenn das neue Kraftfahrzeug nach einer Endkonservierung einem Käufer übergeben wird. Wird jedoch die Windschutzscheibe bei einer Zwischenlagerung des Kraftfahrzeugs, bei der Konservierung usw. verschmutzt oder ist die Sicht durch Regen behindert, kann die Windschutzscheibe nicht zum Rangieren des Kraftfahrzeugs mit der Wischanlage des Kraftfahrzeugs gereinigt werden. Das Schutzprofil ist steif, hart und liegt nur teilweise auf der Windschutzscheibe auf.

In der DE 30 05 965 A1 wurde vorgeschlagen, auf der der Windschutzscheibe zugewandten Seite am Schutzprofil ein biegsames Band mit der Längskante zu befestigen. Das Schutzprofil besteht aus Hart-PVC und das Band aus Weich-PVC. Wird der Wischer betätigt, wird das Band über die Länge des Wischblatts mehr oder weniger umgelegt und ist dadurch in der Lage, sich in bestimmten Grenzen der Krümmung der Windschutzscheibe anzupassen. Das Band wirkt als Wischlippe, wodurch bei Rangiervorgängen die Wischanlage zur Reinigung der Windschutzscheibe genutzt werden kann, ohne die eigentliche Wischleiste des Wischblatts abzunutzen.

Um das Schutzprofil verliersicher am Wischblatt zu befestigen und die Wischleiste seitlich von Umwelteinflüssen zu schützen, ist ferner bekannt, das Schutzprofil seitlich zu verschweißen. Das Schutzprofil wird hierfür an den seitlichen Stirnseiten erwärmt und gegen eine Platte gedrückt. Es entsteht eine Materialplatte, die das Schutzprofil verschließt. Vor der Montage kann nur eine Stirnseite verschweißt werden. Wird die zweite Stirnseite verschweißt nachdem das Schutzprofil auf die Wischleiste aufgeschoben ist, muß zur Demontage das Schutzprofil aufgeschnitten werden.

### Vorteile der Erfindung

Nach der Erfindung ist ein Schutzprofil in Längsrichtung zumindest an einem Ende mit einem Deckel verschlossen, mit dem das Schutzprofil zur Montage und zur Demontage vorteilhaft mehrfach geöffnet und geschlossen werden kann. Der Deckel kann auf das Schutzprofil aufgesteckt und über eine lösbare kraft- und/oder formschlüssige Verbindung am Schutzprofil befestigt sein. Ferner kann der Deckel verliersicher mit dem Schutzprofil verbunden und über Rastmittel in einer Schließstellung und/oder in einer Öffnungsstellung fixierbar sein, beispielsweise bei einem Deckel, der über ein Gelenk mit dem Schutzprofil verliersicher verbunden ist, durch eine Drehbewegung oder bei einem Deckel, der über eine Schiene mit dem Schutzprofil verbunden ist, durch eine geradlinige Bewegung usw.

Die Montage und Demontage ist mit dem erfindungsgemäßen Dekkel einfach und kostengünstig. Das Schutzprofil kann vorteilhaft beidseitig verschlossen werden, ohne daß das Schutzprofil bei der Demontage zerstört werden muß. Das Schutzprofil ist nach der Demontage wiederverwendbar. Der Deckel kann mit anderen Verschlüssen kombiniert werden, beispielsweise mit einer verschweißten Stirnseite usw., vorteilhaft ist jedoch das Schutzprofil mit zwei Deckeln verschlossen. In einer Ausgestaltung wird vorgeschlagen, das Schutzprofil mit zwei Dekkeln zu verschließen, die an der Wischleiste anliegen. Das Schutzprofil ist beidseitig gegen Umwelteinflüsse geschützt, verliersicher auf der Wischleiste befestigt und in beide Längsrichtungen fixiert, so daß beim Betrieb des Wischers Reibung zwischen der Schutzschiene und der Wischleiste und Verschleiß vermieden wird.

Mit einem Deckel, der zwei Verschlußflächen und quer zur Längsrichtung eine Symmetrieachse aufweist, bestehen zumindest zwei Möglichkeiten den Deckel zu montieren, und zwar um die Symmetrieachse um jeweils 180° verdreht. Die Montage wird vereinfacht und die zweite Verschlußfläche kann vorteilhaft als Griff für die Demontage genutzt werden.

In einer weiteren Ausgestaltung wird vorgeschlagen, daß das Schutzprofil in Längsrichtung zumindest an einem Ende mit einem quer zur Längsrichtung nach innen gerichteten Vorsprung verschlossen ist. Der Vorsprung kann einfach und schnell eingebracht werden, beispielsweise bei Metallprofilen mit einer Art Zange, bei Kunststoffprofilen mit einer Wärmequelle und besonders vorteilhaft mit einer Ultraschallquelle. Ein Schutzprofil, das zwischen dem in eine erste Seitenwange geformten Vorsprung und einer zweiten Seitenwange einen Spalt aufweist, durch den die Wischleiste mit einer Wischlippe bei der Montage und bei der Demontage führbar ist, kann bereits in der Fertigung mit zwei Vorsprüngen beidseitig verschlossen werden. Montageschxitte am Wischer zum Verschließen des Schutzprofils werden eingespart, die Montage wird zeitlich verkürzt, vereinfacht und kostengünstiger. Zusätzliche Bauteile, wie beispielsweise Deckel werden vermieden. Ferner wird bei einem beidseitig verschlossenen Schutzprofil eine zerstörungsfreie Demontage ermöglicht. Das Schutzprofil kann mehrfach wiederverwendet werden, wodurch die Umwelt geschont und Energie, beispielsweise zum Recyceln, gespart wird.

Um das Schutzprofil bei der Montage leichter auf die Wischleiste aufschieben zu können, besitzt der Vorsprung in Längsrichtung zur Stirnseite eine nach innen geneigte Schräge, die die Wischlippe der Wischleiste bei der Montage in Richtung des Spalts lenkt. Ferner besitzt der Vorsprung in Längsrichtung eine zweite nach außen geneigte, vorteilhaft steilere Schräge, die einen festen Halt des Schutzprofils während des Betriebs des Wischers auf der Wischleiste sicherstellt und eine zerstörungsfreie Demontage erleichtert, indem sie die Wischlippe der Wischleiste in den Spalt lenkt.

Der Verschluß mit einem Vorsprung kann mit anderen Verschlüssen kombiniert werden, beispielsweise mit einem Deckel oder mit einer verschweißten Stirnseite. Vorteilhaft ist jedoch das Schutzprofil an beiden Stirnseiten mit einem Vorsprung verschlossen. Um das Schutzprofil in beide Längsrichtungen zu fixieren, ist vorteilhaft der Abstand der Vorsprünge gleich der Länge der Wischleiste. Reibung und Verschleiß zwischen der Schutzschiene und der Wischleiste werden vermieden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt eines Wischblatts,
- Fig. 2: einen vergrößerten Schnitt entlang der Linie II-II in Fig. 1,
- Fig. 3: eine vergrößerte Ansicht eines Ausschnitts III in Fig. 1,
- Fig. 4: einen Schnitt entlang der Linie IV-IV in Fig. 3,
- Fig. 5: einen Deckel,
- Fig. 6: einen Schnitt entlang der Linie VI-VI in Fig. 5,
- Fig. 7: eine Variante nach Fig. 5,
- Fig. 8: einen Schnitt entlang der Linie VIII-VIII in Fig. 7,
- Fig. 9: einen Deckel nach Fig. 7 im montierten Zustand,
- Fig. 10: eine Variante eines Schutzprofils nach Fig. 1,
- Fig. 11: einen Schnitt entlang der Linie XI-XI in Fig. 10,
- Fig. 12: eine Variante eines Schutzprofils nach Fig. 10,
- Fig. 13: einen Schnitt entlang der Linie XIII-XIII in Fig. 12 und
- Fig. 14: einen Schnitt entlang der Linie XIV-XIV in Fig. 12.

### Beschreibung der Ausführungsbeispiele

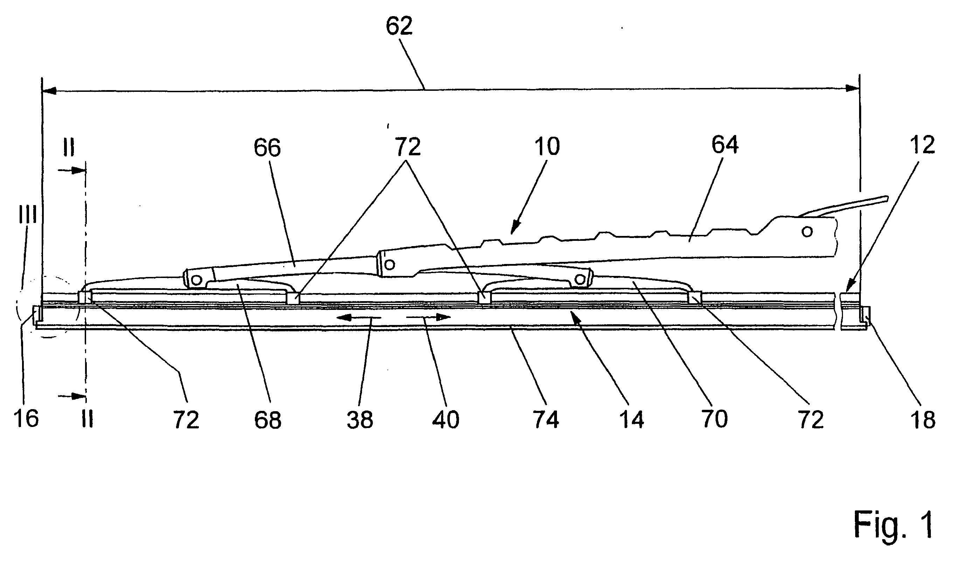

Fig. 1 zeigt einen Ausschnitt eines Wischblatts, das ein Tragbügelsystem 10 aufweist mit einem Hauptbügel 64, der gelenkig mit Zwischenbügeln 66 verbunden ist, an dessen Enden Krallenbügel 68, 70 angelenkt sind. In Haltekrallen 72 der Krallenbügel 68, 70 ist eine Wischleiste 12 befestigt. Um die Wischleiste 12 gegen Wärme und sonstige Umwelteinflüsse vor der Auslieferung an einen Käufer zu schützen, ist diese mit einem Schutzprofil 14 umgeben, an dem zur Windschutzscheibe ein Wischelement 74 befestigt ist.

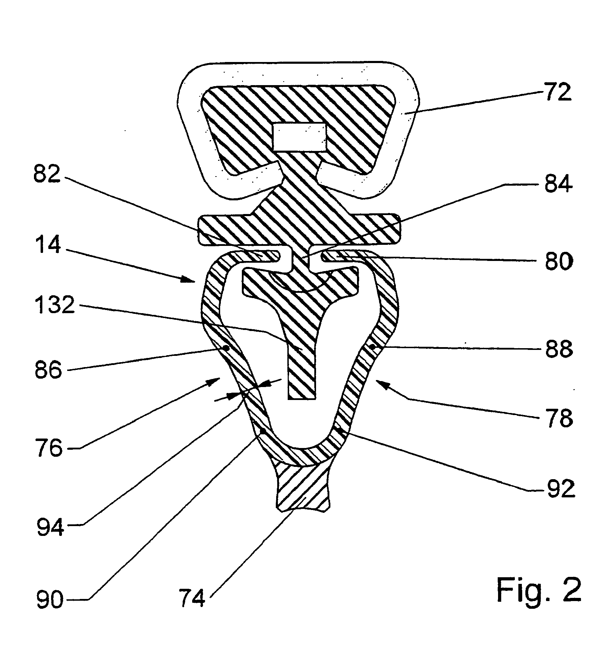

Das Schutzprofil 14 ist aus einem elastischen Kunststoff, und zwar aus Polypropylen und ist durch elastische Verformung Krümmungen der Windschutzscheibe anpaßbar. Das Schutzprofil 14 weist ein langgestrecktes Hohlprofil mit zwei die Wischleiste 12 umgebenden Seitenwangen 76, 78 auf, das mit krallenartigen Ansätzen 80, 82 an der Wischleiste 12 im Bereich eines Kippstegs 84 befestigt ist und sich von der Wischleiste 12 in Richtung Windschutzscheibe verjüngt (Fig. 2). Jede Seitenwange 76, 78 besitzt zwei Wendepunkte 86, 88, 90, 92 die Ansatzstellen für eine elastische Verformung bilden und diese begünstigen. Möglich sind auch mehrere Wendepunkte, beispielsweise gewellte Seitenwangen. Ferner ist die elastische Verformbarkeit durch ein zur Windschutzscheibe abgerundetes, insgesamt birnenförmiges Profil und durch eine Wandstärke 94 kleiner als 0,8 mm unterstützt. Die Wandstärke 94 ist vorteilhaft im dargestellten Ausführungsbeispiel gleichbleibend 0,6 mm, kann jedoch variiert werden.

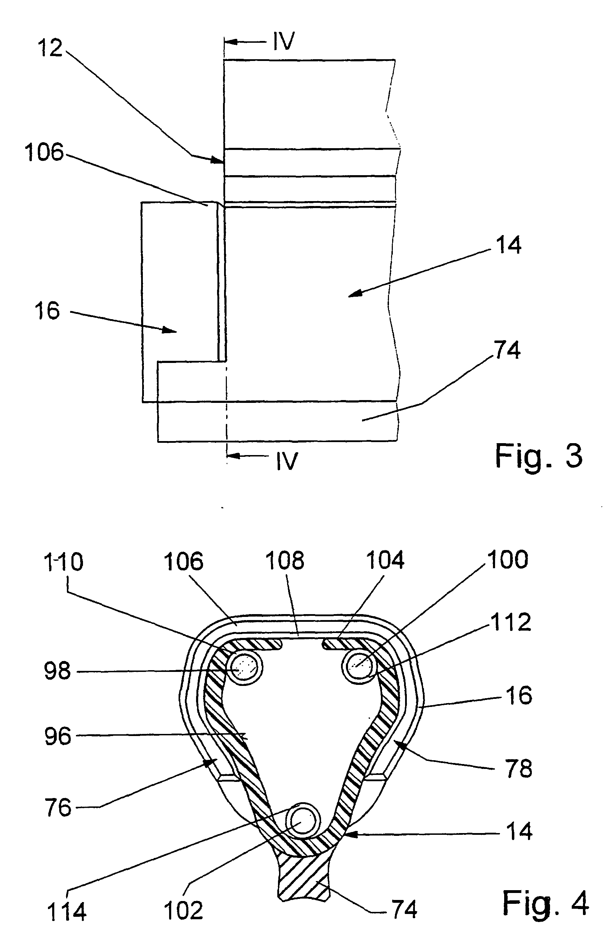

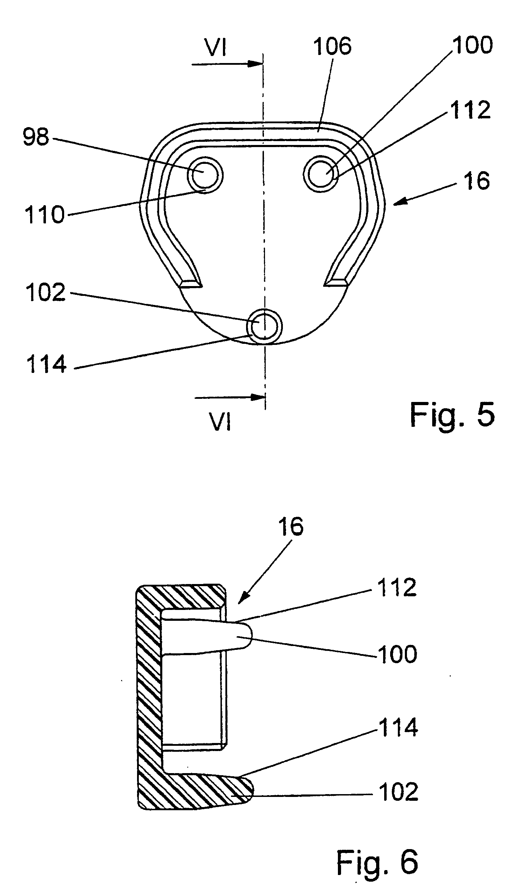

Fig. 3 zeigt einen vergrößerten Ausschnitt III in Fig. 1. Das Schutzprofil 14 ist in Längsrichtung 38, 40 an beiden Enden mit einem Kunststoffdeckel 16, 18 verschlossen. Die Deckel 16, 18 sind auf das Schutzprofil 14 aufgesteckt und mit diesem lösbar kraftschlüssig über drei an der Innenseite 96 des Schutzprofils 14 anliegenden Zapfen 98, 100, 102 und über einen auf einer Deckseite 104 des Schutzprofils 14 aufliegenden Bund 106 verbunden (Fig. 4, 5 und 6). Um den Deckel 16, 18 leicht montieren bzw. auf das Schutzprofil 14 aufstecken zu können, weisen der Bund 106 und die Zapfen 98, 100, 102 Phasen 108, 110, 112, 114 auf. Die Deckel 16, 18 können zur Demontage vom Schutzprofil 14 abgezogen werden.

Das Schutzprofil 14 ist verliersicher am Wischblatt befestigt, die Wischleiste 12 ist seitlich von Umwelteinflüssen geschützt und das Schutzprofil 14 ist mit den Deckeln 16, 18 leicht zu montieren und zu demontieren. Insbesondere kann ein beidseitig verschlossenes Schutzprofil 14 mit zumindest einem Deckel 16 oder 18 nach der Demontage wiederverwendet werden. Um zu vermeiden, daß das Schutzprofil 14 auf der Wischleiste 12 beim Betrieb des Wischers verschoben wird und zu Reibung und Verschleiß führt, liegen die Deckel 16, 18 mit dem Bund 106 an der Wischleiste 12 an und fixieren das Schutzprofil in beide Längsrichtungen 38, 40 (Fig. 1 und 3). Die Elastizität des Schutzprofils 14 wird durch die Deckel 16, 18 nur unwesentlich beeinflußt, die nur teilweise an dem Schutzprofil 14 anliegen. Die Seitenwangen 76, 78 können bei einer elastischen Verformung des Schutzprofils 14 nach innen ausweichen, ohne vom Deckel 16, 18 behindert zu werden (Fig. 4).

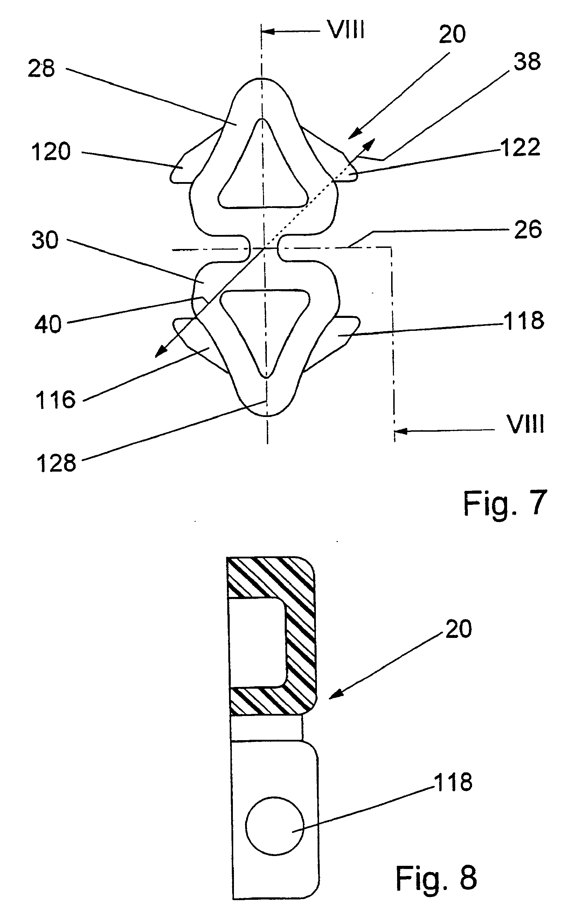

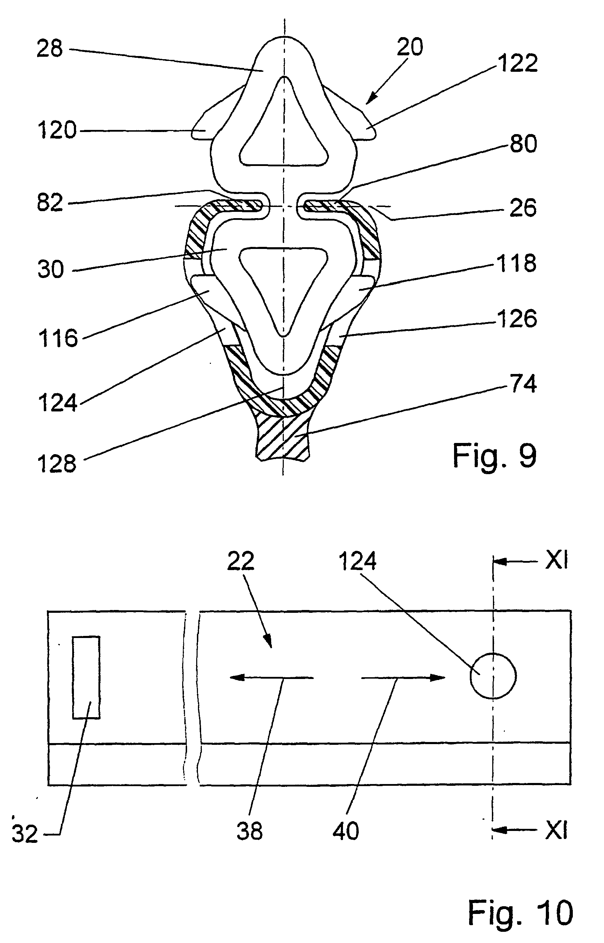

In Fig. 7, 8 und 9 ist ein Deckel 20 dargestellt, der zusätzlich zu einem Kraftschluß über Zapfen 116, 118, 120, 122 in Öffnungen 124, 126 in Seitenwangen 42, 130 eines Schutzprofils 22 lösbar befestigt ist (Fig. 10 u. 11). Der Deckel 20 besitzt quer zur Längsrichtung 38, 40 eine Symmetrieachse 26, senkrecht zur Längsrichtung 38, 40 eine Symmetrieachse 128 und zwei Verschlußflächen 28, 30, die jeweils der Querschnittgeometrie des Schutzprofils 22 angeglichen sind. Der Deckel 20 kann jeweils um die Symmetrieachsen 26, 128 um 180° verdreht und dadurch auf vier verschiedene Arten montiert werden. Die Montage wird vereinfacht und die zweite über das Schutzprofil 22 ragende Verschlußfläche 28 bzw. 30 kann vorteilhaft als Griff für die Demontage genutzt werden.

Das Schutzprofil 22 ist in Längsrichtung 40 mit dem Deckel 20 verschließbar und ist in Längsrichtung 38 an einem zweiten Ende mit einem Vorsprung 32 quer zur Längsrichtung 38, 40 verschlossen (Fig. 10). Das Schutzprofil 22 ist aus Kunststoff und der Vorsprung 32 ist in die Seitenwange 42 mit einer Ultraschallquelle eingebracht und ragt bis zur zweiten Seitenwange 130.

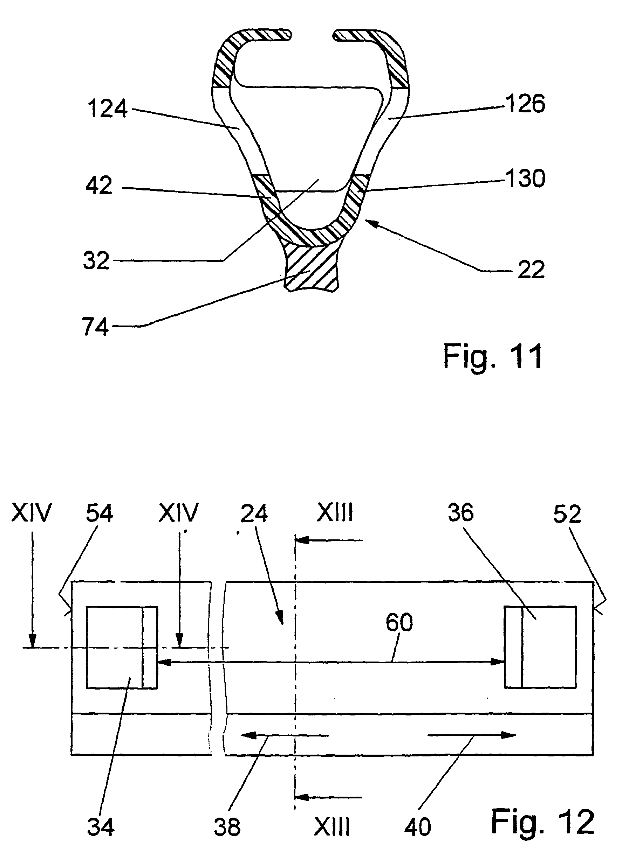

In Fig. 12, 13 und 14 ist ein Schutzprofil 24 dargestellt, das in Längsrichtung 38, 40 an seinen beiden Enden mit Vorsprüngen 34, 36 verschlossen ist, die quer zur Längsrichtung 38, 40, nach innen gerichtet in eine Seitenwange 44 eingebracht sind. Die Vorsprünge 34, 36 sind in das Kunststoffschutzprofil 24 mit einer Ultraschallquelle bzw. Ultraschallsonde in die Seitenwange 44 angeformt.

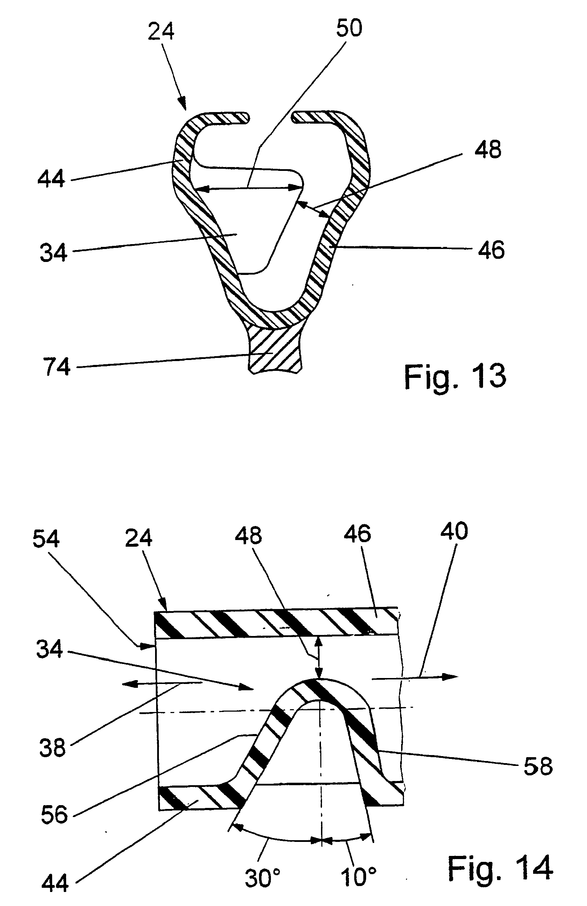

Die Länge 50 des Vorsprungs 34 nimmt in Richtung Windschutzscheibe ab, daß ein in etwa gleichbleibender Spalt 48 zwischen dem Vorsprung 34 und einer zweiten Seitenwange 46 entsteht, durch den die Wischleiste 12 bei der Montage und der Demontage mit einer Wischlippe 132 (Fig. 2) zerstörungsfrei führbar ist (Fig. 13 und 14). Der Vorsprung 34 verjüngt sich quer zur Längsrichtung 38, 40 und besitzt zur Stirnseite 54 eine in Längsrichtung 40 nach innen geneigte erste flachere Schräge 56 von 30°, die die Wischlippe 132 der Wischleiste 12 bei der Montage in Richtung des Spalts 48 lenkt und die Montage erleichtert (Fig. 14). Ferner besitzt der Vorsprung 34 in Längsrichtung 40 zur Innenseite eine zweite in Längsrichtung 38 nach außen geneigte, steilere Schräge 58, von 10°, die einen festen Halt des Schutzprofils 24 während des Betriebs des Wischers auf der Wischleiste 12 sicherstellt und eine zerstörungsfreie Demontage erleichtert.

Der Vorsprung 36 besitzt die gleiche Form wie der Vorsprung 34 mit einer nicht näher dargestellten flacheren Schräge zur Stirnseite 52 und einer steileren Schräge zur Innenseite. Die Vorsprünge 34, 36 sind mit einem Abstand 60 voneinander angeordnet, der gleich einer Länge 62 der Wischleiste 12 ist (Fig. 12 und 1). Reibung zwischen dem Schutzprofil 24 und der Wischleiste 12 wird vermieden und das Schutzprofil 24 ist verliersicher und wiederverwendbar am Wischblatt befestigt. Ferner ist die Wischleiste 12 seitlich gegen Umwelteinflüsse geschützt. Die Vorsprünge 34, 36 erstrecken sich nur über einen kleinen Teil des Umfangs des Schutzprofils 24, so daß die elastische Verformbarkeit nur unwesentlich beeinträchtigt wird.

### Bezugszeichen

- 10: Tragbügelsystem
- 12: Wischleiste
- 14: Schutzprofil
- 16: Deckel
- 18: Deckel
- 20: Deckel
- 22: Schutzprofil
- 24: Schutzprofil
- 26: Symmetrieachse
- 28: Verschlußfläche
- 30: Verschlußfläche
- 32: Vorsprung
- 34: Vorsprung
- 36: Vorsprung
- 38: Längsrichtung
- 40: Längsrichtung
- 42: Seitenwange
- 44: Seitenwange
- 46: Seitenwange
- 48: Spalt
- 50: Länge
- 52: Stirnseite
- 54: Stirnseite
- 56: Schräge
- 58: Schräge
- 60: Abstand
- 62: Länge
- 64: Hauptbügel
- 66: Zwischenbügel
- 68: Krallenbügel
- 70: Krallenbügel
- 72: Haltekrallen
- 74: Wischelement
- 76: Seitenwangen
- 78: Seitenwangen
- 80: Ansatz
- 82: Ansatz
- 84: Kippsteg
- 86: Wendepunkt
- 88: Wendepunkt
- 90: Wendepunkt
- 92: Wendepunkt
- 94: Wandstärke
- 96: Innenseite
- 98: Zapfen
- 100: Zapfen
- 102: Zapfen
- 104: Deckseite
- 106: Bund
- 108: Phase
- 110: Phase
- 112: Phase
- 114: Phase
- 116: Zapfen
- 118: Zapfen
- 120: Zapfen
- 122: Zapfen
- 124: Öffnung
- 126: Öffnung
- 128: Symmetrieachse
- 130: Seitenwange
- 132: Wischlippe

## Patentansprüche

1. Wischblatt zum Reinigen von Scheiben an Kraftfahrzeugen mit einer von einem Tragbügelsystem (10) gehaltenen Wischleiste (12), die von einem seitlich verschlossenen Schutzprofil (14, 22, 24) umgeben ist und eine der Windschutzscheibe zugewandte Längskante mit einem Wischelement (74) aufweist, **dadurch gekennzeichnet, dass** das Schutzprofil (14, 22) in Längsrichtung (38, 40) zumindest an einem Ende mit einem Deckel (16, 18, 20) verschlossen ist, mit dem das Schutzprofil (14,22) geöffnet und geschlossen werden kann.

2. Wischblatt nach Anspruch 1, **dadurch gekennzeichnet, daß** das Schutzprofil (14) mit zwei Deckeln (16, 18) verschlossen ist.

3. Wischblatt nach einem der vorhergehenden Ansprüche, **dadurch gekennzeichnet, daß** der Deckel (16, 18, 20) an der Wischleiste (12) anliegt.

4. Wischblatt nach einem der vorhergehenden Ansprüche, **dadurch gekennzeichnet, daß** der Deckel (20) zwei Verschlußflächen (28, 30) und quer zur Längsrichtung (38, 40) eine Symmetrieachse (26) aufweist.

5. Wischblatt nach dem Oberbegriff des Anspruchs 1, **dadurch gekennzeichnet, daß** das Schutzprofil (22, 24) in Längsrichtung (38, 40) zumindest an einem Ende mit einem quer zur Längsrichtung (38, 40) nach innen gerichteten Vorsprung (32, 34, 36) verschlossen ist.

6. Wischblatt nach Anspruch 5, **dadurch gekennzeichnet, daß** der Vorsprung (32, 34, 36) in einer ersten Seitenwange (42, 44) des Schutzprofils (22, 24) eingebracht ist.

7. Wischblatt nach Anspruch 6, **dadurch gekennzeichnet, daß** das Schutzprofil (24) zwischen dem Vorsprung (34) und einer zweiten Seitenwange (46) einen Spalt (48) aufweist, durch den die Wischleiste (12) mit einer Wischlippe (132) bei der Montage und bei der Demontage führbar ist.

8. Wischblatt nach Anspruch 7, **dadurch gekennzeichnet, daß** die Länge (50) des Vorsprungs (34) in Richtung Scheibe abnimmt und der Spalt (48) nahezu gleichbleibend breit ist.

9. Wischblatt nach Anspruch 8, **dadurch gekennzeichnet, daß** der Vorsprung (34) in Längsrichtung (38) zur Stirnseite (54) eine in Längsrichtung (40) nach innen geneigte Schräge (56) aufweist, die bei der Montage die Wischlippe (132) der Wischleiste (12) zum Spalt (48) lenkt.

10. Wischblatt nach Anspruch 8 oder 9, **dadurch gekennzeichnet, daß** der Vorsprung (34) in Längsrichtung (40) zur Innenseite eine in Längsrichtung (38) nach außen geneigte Schräge (58) aufweist, die bei der Demontage die Wischlippe (132) der Wischleiste (12) zum Spalt (48) lenkt.

11. Wischblatt nach Anspruch 9 und 10, **dadurch gekennzeichnet, daß** die nach innen geneigte Schräge (56) flacher ist als die nach außen geneigte Schräge (58).

12. Wischblatt nach einem der Ansprüche 5 bis 11, **dadurch gekennzeichnet, daß** das Schutzprofil (24) zwei Vorsprünge (34, 36) aufweist, deren Abstand (60) gleich der Länge (62) der Wischleiste (12) ist.

13. Verfahren zur Herstellung eines Wischblatts nach einem der Ansprüche 5 bis 12, **dadurch gekennzeichnet, daß** das Schutzprofil (22, 24) aus Kunststoff ist und der Vorsprung (32, 34, 36) mit einer Ultraschallquelle eingebracht wird.

## Claims

1. Wiper blade for cleaning vehicle windscreens, with a wiper strip (12), which is held by a supporting-bracket system (10) and is surrounded by a laterally closed protective profile (14, 22, 24) and has a longitudinal edge, which faces the windscreen and has a wiper element (74), **characterized in that** the protective profile (14, 22) is closed in the longitudinal direction (38, 40) at least at one end by a cover (16, 18, 20) with which the protective profile (14, 22) can be opened and closed.

2. Wiper blade according to Claim 1, **characterized in that** the protective profile (14) is closed by two covers (16, 18).

3. Wiper blade according to one of the preceding claims, **characterized in that** the cover (16, 18, 20) bears against the wiper strip (12).

4. Wiper blade according to one of the preceding claims, **characterized in that** the cover (20) has two closure surfaces (28, 30) and an axis of symmetry (26) transversely to the longitudinal direction (38, 40).

5. Wiper blade according to the precharacterizing clause of Claim 1, **characterized in that** the protective profile (22, 24) is closed in the longitudinal direction (38, 40) at least at one end by a projection (32, 34, 36) which is directed inwards transversely to the longitudinal direction (38, 40).

6. Wiper blade according to Claim 5, **characterized in that** the projection (32, 34, 36) is placed in a first side cheek (42, 44) of the protective profile (22, 24).

7. Wiper blade according to Claim 6, **characterized in that** the protective profile (24) has a gap (48) between the projection (34) and a second side cheek (46), through which gap the wiper strip (12) together with a wiper lip (132) can be guided during the installation and during the removal.

8. Wiper blade according to Claim 7, **characterized in that** the length (50) of the projection (34) decreases in the direction of the windscreen, and the gap (48) is of virtually constant width.

9. Wiper blade according to Claim 8, **characterized in that**, in the longitudinal direction (38) towards the end side (54), the projection (34) has a slope (56) which is inclined inwards in the longitudinal direction (40) and guides the wiper lip (132) of the wiper strip (12) to the gap (48) during the installation.

10. Wiper blade according to Claim 8 or 9, **characterized in that**, in the longitudinal direction (40) towards the inside, the projection (34) has a slope (58) which is inclined outwards in the longitudinal direction (38) and guides the wiper lip (132) of the wiper strip (12) to the gap (48) during the removal.

11. Wiper blade according to Claims 9 and 10, **characterized in that** the inwardly inclined slope (56) is flatter than the outwardly inclined slope (58).

12. Wiper blade according to one of Claims 5 to 11, **characterized in that** the protective profile (24) has two projections (34, 36), the distance (60) between which is equal to the length (62) of the wiper strip (12).

13. Method for producing a wiper blade according to one of Claims 5 to 12, **characterized in that** the protective profile (22, 24) is made from plastic and the projection (32, 34, 36) is introduced using an ultrasound source.

## Revendications

1. Balai d'essuie-glace de vitre de véhicule comportant une lame d'essuyage (12) portée par un système de palonniers (10), et entourée par un profil protecteur (14, 22, 24) fermé latéralement et ayant une arête longitudinale avec un élément d'essuyage (14) tourné vers le pare-brise,
**caractérisé en ce que**
le profil protecteur (14, 22) est fermé à au moins une extrémité dans la direction longitudinale (38, 40), par un capot (16, 18, 20) qui permet d'ouvrir et de fermer le profil protecteur (14, 22).

2. Balai d'essuie-glace selon la revendication 1,
**caractérisé en ce que**
le profil protecteur (14) est fermé par deux capots (16, 18).

3. Balai d'essuie-glace selon l'une quelconque des revendications précédentes,
**caractérisé en ce que**
le capot (16, 18, 20) est appliqué contre la lame d'essuyage (12).

4. Balai d'essuie-glace selon l'une quelconque des revendications précédentes,
**caractérisé en ce que**
le capot (20) comporte deux surfaces de fermeture (28, 30) et un axe de symétrie (26)transversalement à la direction longitudinale (38, 40).

5. Balai d'essuie-glace selon le préambule de la revendication 1,
**caractérisé en ce que**
le profil protecteur (22, 24) est fermé dans la direction longitudinale (38, 40) à au moins une extrémité par une partie en saillie (32, 34, 36) dirigée vers l'intérieur, transversalement à la direction longitudinale (38, 40).

6. Balai d'essuie-glace selon la revendication 5,
**caractérisé en ce que**
la partie en saillie (32, 34, 36) est réalisée dans un premier côté (42, 44) du profil protecteur (22, 24).

7. Balai d'essuie-glace selon la revendication 6,
**caractérisé en ce que**
le profil protecteur (24) comporte entre la partie en saillie (34) et un second côté (46), un intervalle (48) permettant de guider la lame d'essuyage (12) avec une lèvre d'essuyage (132) au montage et au démontage.

8. Balai d'essuie-glace selon la revendication 7,
**caractérisé en ce que**
la longueur (50) de la partie en saillie (34) diminue en direction du pare-brise et l'intervalle (48) a une largeur pratiquement constante.

9. Balai d'essuie-glace selon la revendication 8,
**caractérisé en ce que**
la partie en saillie (34) présente dans la direction longitudinale (38) par rapport à la face frontale (54), une rampe (56) inclinée vers l'intérieur dans la direction longitudinale (40) et qui, lors du montage, dirige vers l'intervalle (48) la lèvre d'essuyage (132) de la lame d'essuyage (12).

10. Balai d'essuie-glace selon l'une quelconque des revendications 8 ou 9,
**caractérisé en ce que**
la partie en saillie (34) présente dans la direction longitudinale (40), du côté intérieur, une rampe (58) inclinée vers l'extérieur dans la direction longitudinale (38), et cette rampe guide la lèvre d'essuyage (132) de la lame d'essuyage (12) vers l'intervalle (48) au moment du démontage.

11. Balai d'essuie-glace selon l'une quelconque des revendications 9 et 10,
**caractérisé en ce que**
la rampe (56) inclinée vers l'intérieur est plus plate que la rampe (58) inclinée vers l'extérieur.

12. Balai d'essuie-glace selon l'une quelconque des revendications 5 à 11.
**caractérisé en ce que**
le profil protecteur (24) comporte deux parties en saillie (34, 36) dont l'écartement (60) est égal à la longueur (62) de la lame d'essuyage (12).

13. Procédé de fabrication d'une lame d'essuyage selon l'une quelconque des revendications 5 à 12,
**caractérisé en ce que**
le profil protecteur (22, 24) est en matière plastique et la partie en saillie (32, 34, 36) est réalisée à l'aide d'une source à ultra-sons.
